# EUROPEAN PATENT SPECIFICATION

(11) **EP 2 308 752 B1**
(45) Date of publication and mention of the grant of the patent: **16.12.2015**
(21) Application number: 09275096.7
(22) Date of filing: 06.10.2009
(51) Int. Cl.: B64C 13/04, G05G 1/62, G05G 1/08

(54) **Cockpit handgrip and armrest**
Cockpit-Handgriff und -Armlehne
Poignée et accoudoir pour cockpit

(43) Date of publication of application: 13.04.2011
(73) Proprietor: BAE SYSTEMS plc, London SW1Y 5AD (GB)
(72) Inventor: Coote, David John, Kent ME1 2XX (GB); Horton, Oliver Trevor, Kent ME1 2XX (GB)
(74) Representative: BAE SYSTEMS plc Group IP Department

(56) References cited:
- EP-A1- 0 695 664
- DE-A1- 3 626 898
- DE-U1- 9 410 223
- DE-U1-202006 004 965
- FR-A3- 2 889 125

## Description

This invention relates to a handgrip and/or armrest for an occupant of a vehicle. In a preferred embodiment it relates to a combined handgrip and armrest for a flight-crew member of an aircraft.

In many modern aircraft cockpit designs, the control yokes/wheels traditionally located in front of the pilot and co-pilot for primary flight control in roll and pitch are replaced by small sidestick inceptors placed to the side of the pilot/co-pilot, usually in the outboard panelling of the cockpit. Use of such an inceptor for an extended period can cause strain the operator's shoulder and arm, unless adequate support is provided e.g. in the form of an armrest.

Also in modern cockpit designs, secondary controls are installed on a variety of panels around the flight crew seating stations. In a "gla*ss cockpit" individual controls corresponding to each instrument are not necessary, and generic "point and click" controls operating a cursor on a screen provide more flexibility using fewer controls. However, the vibration and turbulence which may be encountered during flight can make it difficult for aircrew to operate such controls accurately.

These problems may also arise in other vehicles, e.g. armoured fighting vehicles or high-speed watercraft, in which a number of controls must be operated in conditions of vibration or turbulence.

From EP0695664A (Same), which is considered to be the closest prior art, it is known to provide a vehicle armrest for a forearm of an occupant of the vehicle, comprising a first surface facing generally towards the occupant and positioned to support said forearm, and a further surface facing in an opposite direction to the first surface generally away from the occupant and the armrest has a handgrip configured to be grasped for support by the occupant of the vehicle.

In a first aspect of the invention, the further surface is provided with a plurality of controls disposed at an end of the armrest away from the occupant, wherein each of the plurality of controls are arranged to be operable by a respective digit of the occupant whilst the occupant's forearm rests on the first surface.

The vehicle occupant thus is provided with a handgrip which can steady his hand whilst he operates the controls.

The handgrip may be part of an armrest for a forearm of the occupant.

The disposition of the controls on the armrest in this manner enables the occupant both to support his forearm and to steady his hand whilst operating the controls.

In a preferred form of the second aspect, the armrest may comprise a handgrip wherein a portion of the said first surface of the armrest is configured also to be grasped for support by the occupant, the at least one control being operable by the occupant whilst grasping the handgrip for support.

The armrest may be positioned within the vehicle so as to support the occupant's forearm whilst he operates a primary control inceptor of the vehicle.

It then can have the dual function of providing support for the occupant whilst operating the primary control inceptor, and of accommodating the other controls in a convenient manner for operation by the occupant when he is not manipulating the primary control inceptor, e.g. whilst acting as co-pilot. In known arrangements, such controls have to be accommodated elsewhere if an armrest is to be provided.

The first surface may face generally towards the occupant.

The said further surface may face oppositely to the first surface and thus may face generally away from the occupant. By placing the controls on a surface which does not face towards the occupant a more convenient and comfortable grip can be provided. The further surface may be provided with a plurality of said controls operable by respective digits of an occupant.

The at least one control may be disposed at an end of the handgrip or armrest away from the occupant for operation by a digit of the occupant.

The at least one control may comprise a push-button and or a scroll wheel and/or a joystick. The joystick may be positioned for operation by a thumb of the occupant.

The further surface may comprise at least one groove for receiving a finger of the occupant.

A said pushbutton or scroll wheel may be disposed in the groove.

The invention now will be described merely by way of example with reference to the accompanying drawings, wherein:
Figure 1 shows a typical modern aircraft flight deck or cockpit;
Figure 2 shows in three orthogonal views a combined armrest and handgrip according to the invention, and
Figure 3 is a perspective view from beneath of the armrest of Figure 2.

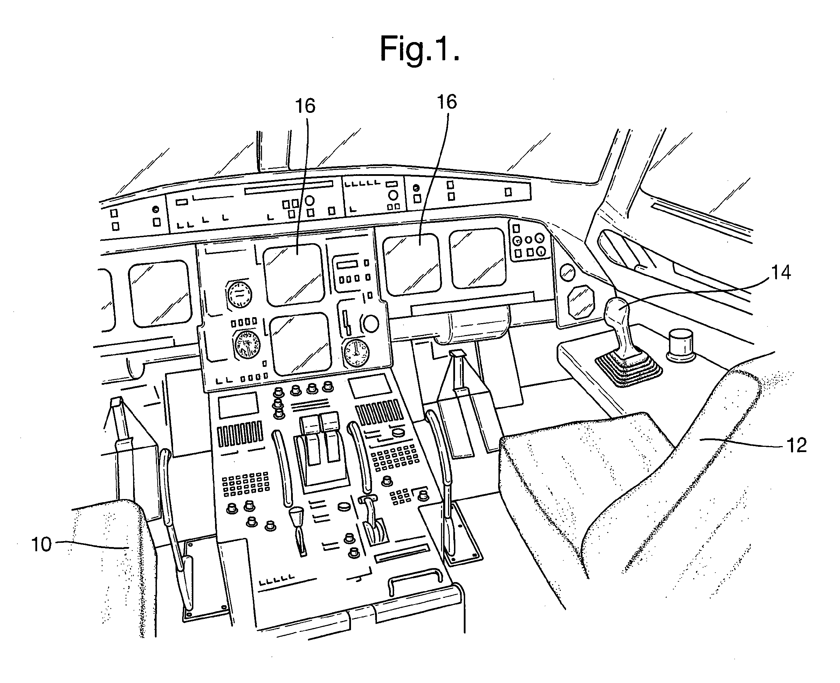

Referring to Figure 1, there is shown a typical modern aircraft cockpit, here of a twin-engine commercial airliner. As is customary, major controls and instruments are duplicated on each side of the aircraft centre-line, so that the aircraft can be flown from either the left-hand (captain's) seat 10 or the righthand (co-pilot's) seat 12. Each pilot is provided with a primary flight control inceptor or sidestick 14 disposed outwardly of his seat towards the outboard side of the cockpit. In front of the pilot are provided multi-function screens 16, some of the displays available on them being controlled by minor controls at various locations in the cockpit. No armrest is provided for the pilot's forearm whilst operating the side stick 14, and the minor controls for the displays 16 have to be operated with an unsteadied hand. The problems discussed above thus are likely to arise.

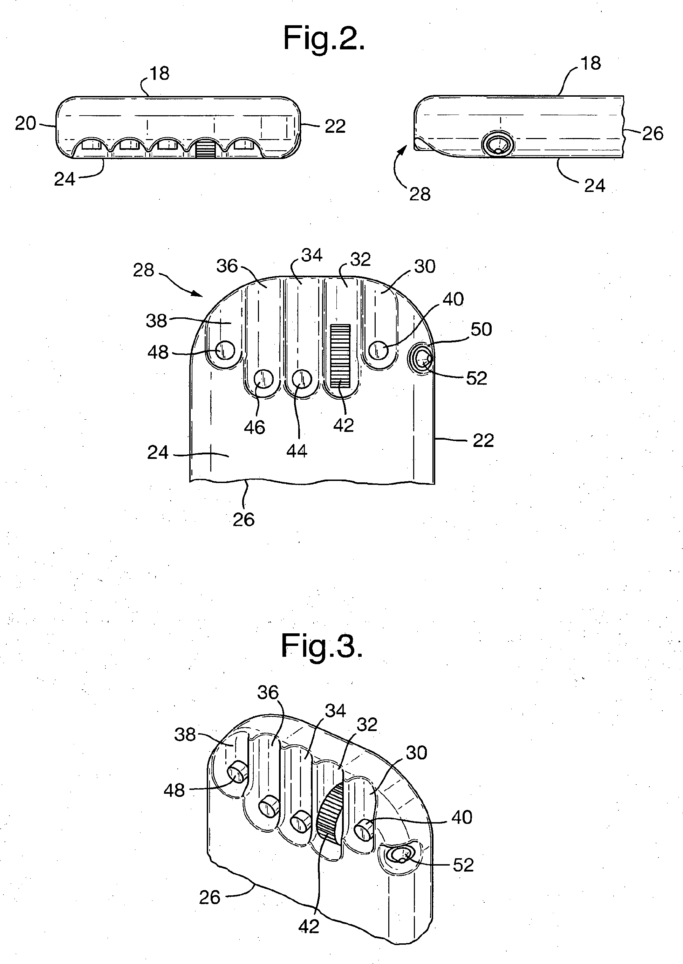

Figures 2 and 3 show the end of an armrest and handgrip according to the invention, intended to be installed to the rear of the co-pilot's side stick 14 so as to support the co-pilot's forearm when he operates the sidestick. An oppositely-handed, but otherwise identical, armrest/handgrip is provided to the rear of the captain's joystick on the left side of the cockpit.

The armrest comprises an upper surface 18 which faces generally towards the user, laterally-facing side surfaces 20, 22 and a lower surface 24 which faces directly (oppositely) away from the user. The armrest has a proximal end closest to the user and a distal end 28 remote from the user. The armrest is only partially shown in figures 2 and 3; it extends rearwardly from its distal end at 26 to its proximal end (not shown) which is fixed to a suitable mounting on the user's seat or on adjacent structure in the cockpit. The length of the armrest is such as to support the entire length of the user's forearm. The upper and lower surfaces 18, 24 adjacent the distal end 28 of the armrest form a handgrip portion around which the user can curl his fingers so as to grasp the handgrip between his fingers and the ball of this thumb.

The armrest has the further function of providing a convenient location for a number of secondary controls.

The lower surface 24 has at its distal end a number of grooves (here five) 30-38 shaped to receive the user's fingers. Each groove contains a respective control inceptor. Thus groove 30 contains a push button 40 for operation by the user's index finger, groove 32 contains a scroll wheel 42 also for operation by the user's index finger, and grooves 34, 36, 38 contain further buttons 44-48 for operation by the user's middle, ring and little fingers. A recess 50 in the side surface 22 contains a small joystick 52 operable the user's thumb. The joystick can be tilted in two dimensions (four directions) and also can be depressed to operate a push-to-make switch. It thus conveniently can be used to manipulate a cursor on a display screen in a point-and-click mode. Alternatively, the push-to-make switch can be omitted, and the function provided by one of the buttons 40. 44-48, preferably the button 40 operable by the user's index finger.

The controls on the surface 24 thus can provide control of a variety of secondary functions in the cockpit, which otherwise would require inceptors elsewhere in the pilot's workspace. The controls can be operated by the pilot who is not flying the aircraft, or by either pilot if the aircraft's autopilot is engaged.

It will be appreciated that the combined armrest and handgrip of the invention can bring a number of advantages:
- support of the pilot's forearm whilst operating the primary flight control inceptor,
- the provision of a handgrip which supports and steadies the user's hand whilst operating secondary controls, particularly those associated with a cursor-operated display,
- the convenient grouping-together of a number of secondary controls in an ergonomic manner without any risk of accidental input to the sidestick, as could occur for example if they were grouped together somewhere on the side stick itself.

The invention also includes any novel feature or combination of features herein disclosed, whether or not specifically claimed. The appended abstract as filed is repeated here as part of the specification.

An armrest for use by a pilot whilst operating a side stick inceptor has on its underside a number of secondary controls which can be operated when the side stick is not being used, the armrest then acting as a handgrip enabling the pilot to operate the secondary controls with a steady hand.

## Claims

1. A vehicle armrest for a forearm of an occupant of the vehicle, comprising a first surface (18) facing generally towards the occupant and positioned to support said forearm, and a further surface (24) facing in an opposite direction to the first surface (18) generally away from the occupant and that the armrest has a handgrip configured to be grasped for support by the occupant of the vehicle **characterised in** the further surface (24) is provided with a plurality of controls (40, 42, 44-48, 52) disposed at an end of the armrest away from the occupant, wherein each of the plurality of controls are arranged to be operable by a respective digit of the occupant whilst the occupant's forearm rests on the first surface (18).

2. The armrest of claim 1 wherein the at least one control (40, 42, 44-48, 52) comprises a push-button (40, 44-48) and/or scroll wheel (42).

3. The armrest of either claim 1 or claim 2 wherein the at least one control (40, 42, 44-48, 52) comprises a joystick (52).

4. The armrest of claim 3 wherein the joystick (52) is positioned for operation by a thumb of the occupant.

5. The armrest of any preceding claim wherein the further surface (24) comprises at least one groove (30-38) for receiving a finger of the occupant.

6. The armrest of claim 5 wherein a said push-button (40, 44-48), scroll wheel (42) or other control is disposed in the groove (30-38).

7. A vehicle including the armrest of any of claims 1 to 6, wherein the armrest is positioned within the vehicle so as to support the occupant's forearm whilst the occupant operates a primary control inceptor (14) of the vehicle.

8. The vehicle of claim 7 wherein the primary control inceptor (14) is a side stick controller.

## Patentansprüche

1. Fahrzeugarmlehne für einen Unterarm eines Insassen des Fahrzeugs, umfassend eine erste Fläche (18), die allgemein zum Insassen weist und zum Stützen des Unterarms positioniert ist, sowie eine weitere Fläche (24), die bezüglich der ersten Fläche (18) in einer entgegengesetzten Richtung allgemein vom Insassen weg weist, wobei die Armlehne einen Hand-griff hat, der dazu konfiguriert ist, vom Insassen des Fahrzeugs zum Stützen ergriffen zu werden, **dadurch gekennzeichnet, dass** die weitere Fläche (24) mit einer Vielzahl von Kontrollelementen (40, 42, 44 - 48, 52) versehen ist, die an einem Ende der Armlehne vom Insassen weg angeordnet sind, wobei jedes der Vielzahl von Kontrollelementen so angeordnet ist, dass es mittels eines jeweiligen Fingers des Insassen betätigt werden kann, während der Unterarm des Insassen auf der ersten Fläche (18) ruht.

2. Armlehne nach Anspruch 1, wobei das mindestens eine Kontrollelement (40, 42, 44 - 48, 52) eine Drucktaste (40, 44 - 48) und/oder ein Scrollrad (42) umfasst.

3. Armlehne nach Anspruch 1 oder 2, wobei das mindestens eine Kontrollelement (40, 42, 44 - 48, 52) einen Joystick (52) umfasst.

4. Armlehne nach Anspruch 3, wobei der Joystick (52) so positioniert ist, dass er durch einen Daumen des Insassen betätigt werden kann.

5. Armlehne nach einem der vorhergehenden Ansprüche, wobei die weitere Fläche (24) mindestens eine Nut (30 - 38) zur Aufnahme eines Fingers des Insassen umfasst.

6. Armlehne nach Anspruch 5, wobei die Drucktaste (40, 44 - 48), das Scrollrad (42) oder ein anderes Kontrollelement in der Nut (30 - 38) angeordnet ist.

7. Fahrzeug, das die Armlehne nach einem der Ansprüche 1 bis 6 aufweist, wobei die Armlehne in dem Fahrzeug positioniert ist, um den Unterarm des Insassen zu stützen, während der Insasse ein Primär-Steuerorgan (14) des Fahrzeugs betätigt.

8. Fahrzeug nach Anspruch 7, wobei das Primär-Steuerorgan (14) ein Side Stick Controller ist.

## Revendications

1. Accoudoir de véhicule pour un avant-bras d'un passager du véhicule, comprenant une première surface (18) orientée de manière générale en direction du passager et positionnée de manière à supporter ledit avant-bras, et une autre surface (24) orientée dans une direction opposée à la première surface (18) de manière générale dans une direction s'éloignant du passager, l'accoudoir comportant une poignée configurée pour être saisie à des fins de support par le passager du véhicule, **caractérisé en ce que** l'autre surface (24) est dotée d'une pluralité d'éléments de commande (40, 42, 44 à 48, 52) disposés au niveau d'une extrémité de l'accoudoir éloignée du passager, chaque élément parmi la pluralité d'éléments de commande étant disposé de façon à pouvoir être manipulé par un doigt respectif du passager tandis que l'avant-bras du passager se trouve en appui sur la première surface (18).

2. Accoudoir selon la revendication 1, dans lequel le ou les éléments de commande (40, 42, 44 à 48, 52) comprennent un bouton-poussoir (40, 44 à 48) et/ou une molette (42).

3. Accoudoir selon l'une de la revendication 1 et la revendication 2, dans lequel le ou les éléments de commande (40, 42, 44 à 48, 52) comprennent un manche (52).

4. Accoudoir selon la revendication 3, dans lequel le manche (52) est positionné en vue de sa manipulation par un pouce du passager.

5. Accoudoir selon l'une quelconque des revendications précédentes, dans lequel l'autre surface (24) comprend au moins une rainure (30 à 38) destinée à recevoir un doigt du passager.

6. Accoudoir selon la revendication 5, dans lequel un desdits bouton-poussoir (40, 44 à 48), molette (42) ou un autre élément de commande est disposé dans la rainure (30 à 38).

7. Véhicule comprenant l'accoudoir selon l'une quelconque des revendications 1 à 6, dans lequel l'accoudoir est positionné à l'intérieur du véhicule de façon à supporter l'avant-bras du passager tandis que le passager manipule un dispositif d'amorçage de commande principal (14) du véhicule.

8. Véhicule selon la revendication 7, dans lequel le dispositif d'amorçage de commande principal (14) est un mini-manche latéral.
